# EUROPÄISCHE PATENTSCHRIFT

(11) **EP 3 792 103 B1**
(45) Veröffentlichungstag und Bekanntmachung des Hinweises auf die Patenterteilung: **13.10.2021**
(21) Anmeldenummer: 20000320.0
(22) Anmeldetag: 04.09.2020
(51) Int. Cl.: B60N 2/28, B60R 22/10, B60R 22/26

(54) **BEFESTIGUNGSEINRICHTUNG FÜR FAHRZEUGKINDERSITZE IN KRAFTFAHRZEUGEN, ANORDNUNG MIT EINER BEFESTIGUNGSEINRICHTUNG UND EINEM FAHRZEUGKINDERSITZ, KRAFTFAHRZEUG MIT EINER SOLCHEN ANORDNUNG UND VERWENDUNG DER BEFESTIGUNGSEINRICHTUNG**
FASTENING DEVICE FOR CHILD SEATS IN MOTOR VEHICLES, ARRANGEMENT WITH A FASTENING DEVICE AND A CHILD SEAT, MOTOR VEHICLE WITH SUCH AN ARRANGEMENT AND USE OF THE FASTENING DEVICE
DISPOSITIF DE FIXATION POUR SIÈGES DE VÉHICULE POUR ENFANTS DANS LES VÉHICULES AUTOMOBILES, AGENCEMENT DOTÉ D'UN DISPOSITIF DE FIXATION ET D'UN SIÈGE DE VÉHICULE POUR ENFANT, VÉHICULE AUTOMOBILE DOTÉ D'UN TELLE AGENCEMENT ET UTILISATION DU DISPOSITIF DE FIXATION

(30) Priorität: 10.09.2019 DE 102019124179
(43) Veröffentlichungstag der Anmeldung: 17.03.2021
(73) Patentinhaber: Osann GmbH, DE-78244 Gottmadingen (DE)
(72) Erfinder: Osann, Patrick, 78315 Radolfzell (DE)
(74) Vertreter: Pröll, Jürgen

(56) Entgegenhaltungen:
- EP-A1- 2 261 076
- FR-A3- 2 745 535
- US-A1- 2011 193 394

## Beschreibung

Es werden eine Befestigungseinrichtung für Fahrzeugkindersitze in Kraftfahrzeugen, eine Anordnung mit einer Befestigungseinrichtung und einem Fahrzeugkindersitz, ein Kraftfahrzeug mit einer solchen Anordnung und die Verwendung der Befestigungseinrichtung beschrieben.

### Hintergrund

Fahrzeugkindersitze oder auch Kindersitze für Fahrzeuge werden in Fahrzeugen auf Fahrzeugsitzen angeordnet, um darin Kinder sicher transportieren zu können. Fahrzeugkindersitze sind in verschiedenen Ausführungen bekannt. Bei Fahrzeugkindersitzen wird zwischen in Fahrtrichtung gerichteten Sitzen und entgegen der Fahrtrichtung gerichteten Sitzen (reboard-Sitze) unterschieden. Reboard-Sitze werden auch als Babyträger bezeichnet und dienen zur Aufnahme von Babys bis ca. 9 Monaten. In der anderen Gattung von Fahrzeugkindersitzen werden Kinder transportiert, die schon sitzen können und in Fahrtrichtung blicken. Für solche Kindersitze gibt es Anordnungen mit einer Basis, über welche die Kindersitze mit dem Fahrzeugsitz verbunden werden können. Die Basis wird über ISOFIX-Konnektoren oder andere Befestigungsmittel mit dem Fahrzeugsitz verbunden.

Es gibt auch Fahrzeugkindersitze, die einen um die Hochachse drehbaren Sitzteil mit Rückenlehne aufweisen, wodurch der Kindersitz sowohl in Fahrtrichtung als auch gegen die Fahrtrichtung verstellt werden kann, um Babys und Kleinkinder sicher transportieren zu können. Solche Sitze weisen eine Basis auf, die fest mit dem Fahrzeugsitz, bspw. über ISOFIX-Konnektoren, verbunden werden kann, wobei auf der Basis der Sitzteil drehbar gelagert ist. Der Sitzteil wird über einen zusätzlichen Gurt, der an der Rückenlehne des Fahrzeugkindersitzes angeordnet ist, mit einem Abschnitt an der Rückenlehne des zugehörigen Fahrzeugsitzes oder einem in Fahrtrichtung dahinter befindlichen Abschnitt des Fahrzeugs verbunden. Es ist beim Verdrehen des Sitzelements um die Basis erforderlich, die Länge des Gurtes zu verändern.

### Stand der Technik

Es sind Kindersitze bekannt, die über Gurte zumindest teilweise gehalten werden, welche an der Rückseite des Fahrzeugsitzes oder in Fahrtrichtung hinter diesem Fahrzeugsitz befestigt sind. Das andere Ende der Gurte ist an einem oberen Abschnitt des Kindessitzes mit diesem befestigt. Solche Sitze können eine Basis und einen Sitzteil mit Rückenlehne aufweisen, wobei der Sitzteil um bis zu 360° verdrehbar mit der Basis verbunden ist.

Herkömmliche Konstruktionen mit Befestigungsgurten, die von der Rückseite eines Fahrzeugsitzes über die Lehne des Fahrzeugsitzes geführt sind, bedienen sich stets eines Gurtes, eines Reglers und zweier Ankerpunkte. Die Ankerpunkte sind durch die Stellen definiert, an welchen der Gurt einerseits mit dem Fahrzeug und andererseits mit dem Kindersitz befestigt ist. Der Regler dient dazu, die Länge des Gurtes zu verändern, um bspw. den Gurt zu spannen und den Kindersitz sicher im Fahrzeug zu befestigen. Vorrichtungen zur Längenänderungen bei Gurten sind in verschiedenen Ausführungen bekannt.

Die bekannte Anordnung weist jedoch den Nachteil auf, dass die Bedienung des Reglers für den Benutzer unpraktisch und schwierig ist. Darüber hinaus ist ein einzelner Gurt nicht ausreichend, um den Sitz sicher zu halten.

Zudem muss eine zusätzliche Einrichtung zum Lösen der Arretierung des Sitzelements betätigt werden. Da sich der Regler bei den bekannten Ausführungen im Bereich der Anbindungsstelle an das Fahrzeug befindet, ist das Lösen des Gurtes daher aufwendig, weil der Gurt nicht leicht zugänglich ist.

Aus der US-A-2011193394 ist eine Befestigungseinrichtung mit einem ersten Befestigungsgurt und einem zweiten Befestigungsgurt bekannt.

### Aufgabe

Demgegenüber besteht die Aufgabe darin, die Befestigung von Kindersitzen in Fahrzeugen über Gurte zu ermöglichen, die rückseitig über einen Fahrzeugsitz geführt sind. Ferner soll insbesondere eine verbesserte Befestigung für drehbare Kindersitze bereitgestellt werden, wobei die Bedienung von Gurten verbessert ist. Zudem soll eine alternative Lösung zu bekannten Ausführungen angegeben werden, die einfach ausgebildet und leicht zu bedienen ist. Dabei soll auch sichergestellt sein, dass die Position eines Kindersitzes während des Rotierens eines Sitzelements nicht verändert wird.

### Lösung

Die vorstehend genannte Aufgabe wird durch eine Befestigungseinrichtung für Fahrzeugkindersitze in Kraftfahrzeugen gelöst, mindestens aufweisend einen ersten Befestigungsgurt und einen zweiten Befestigungsgurt, die einen gemeinsamen Befestigungsabschnitt aufweisen, der dazu ausgebildet ist, mit einer korrespondierenden Befestigungsvorrichtung eines Kraftfahrzeugs in Fahrtrichtung hinter einem Fahrzeugsitz befestigt zu werden, wobei der erste Befestigungsgurt und der zweite Befestigungsgurt dazu ausgebildet sind, über einen oberen Abschnitt der Rückenlehne des Fahrzeugsitzes des Kraftfahrzeugs geführt zu werden, wobei der erste Befestigungsgurt über ein erstes Befestigungsmittel an einem oberen Abschnitt der Rückenlehne eines Fahrzeugkindersitzes befestigbar ist, der auf dem Fahrzeugsitz angeordnet ist, und wobei der zweite Befestigungsgurt über ein zweites Befestigungsmittel an einem unteren Basisteil des Fahrzeugkindersitzes befestigbar ist, und wobei der erste Befestigungsgurt und der zweite Befestigungsgurt jeweils Regeleinrichtungen aufweisen, mittels welchen die Länge der Befestigungsgurte zwischen dem gemeinsamen Befestigungsabschnitt und den Befestigungsmitteln veränderbar ist.

Bei der hier beschriebenen Befestigungseinrichtung werden gegenüber bekannten Ausführungen zwei Befestigungsgurte, zwei Regeleinrichtungen und drei Ankerpunkte (erstes Befestigungsmittel, zweites Befestigungsmittel und gemeinsamer Befestigungsabschnitt) verwendet. Dies bietet einen enormen Vorteil in Bezug auf die genannten Schwachpunkte anderer Systeme, da ein Benutzer nur die Regeleinrichtung des ersten Befestigungsgurtes mit einer Hand zu greifen braucht und mit der anderen Hand den Gurt lockern kann, und schon kann der Benutzer den Kindersitz in jede beliebige Richtung drehen und nach vorne oder nach hinten ausrichten, ohne dass bspw. der "Zug" über den zweiten Befestigungsgurt auf eine Basis des Kindersitzes nachlässt. Daraus ergibt sich sowohl eine enorme Erleichterung für den Benutzer als auch eine Verbesserung der Stabilität des Fahrzeugkindersitzes insgesamt.

Der erste Befestigungsgurt verbindet den oberen Teil der Rückenlehne des Fahrzeugkindersitzes mit einem festen Ankerpunkt im Kraftfahrzeug über den gemeinsamen Befestigungsabschnitt. Wenn der Kindersitz gedreht oder die Sitzrichtung geändert werden muss, braucht man nur die zugehörige Regeleinrichtung mit einer Hand zu greifen, den ersten Befestigungsgurt mit der anderen Hand zu lockern und schon lässt sich die Rückenlehne des Kindersitzes frei rotieren und die Sitzrichtung kann auf vorwärts- oder rückwärtsgerichtet eingestellt werden. Der zweite Befestigungsgurt verbindet den Unterbau bzw. die Basis des Kraftfahrzeugkindersitzes mit dem festen Ankerpunkt im Kraftfahrzeug. Indem man den zweiten Befestigungsgurt mithilfe seiner Regeleinrichtung spannt, lässt sich sowohl die gesamte Stabilität des Kindersitzes steigern als auch dessen Stoßfestigkeit erhöhen.

Über den zweiten Befestigungsgurt kann insbesondere die Basis unter Spannung am Fahrzeug befestigt und gehalten werden. Die Basis kann zusätzlich über beispielsweise ISOFIX-Konnektoren oder andere Mittel mit dem Fahrzeugsitz verbunden sein.

Der erste Befestigungsgurt und der zweite Befestigungsgurt sind am gemeinsamen Befestigungsabschnitt miteinander verbunden und über ein entsprechendes im gemeinsamen Befestigungsabschnitt angeordnetes Mittel mit einer korrespondierenden Befestigungsvorrichtung eines Kraftfahrzeugs befestigt. Die korrespondierende Befestigungsvorrichtung kann beispielsweise eine Öse oder ein Haken sein, die an der Rückseite eines Fahrzeugsitzes oder am Boden des Fahrzeugs in Fahrtrichtung hinter einem Fahrzeugsitz angeordnet sind.

Das erste Befestigungsmittel und das zweite Befestigungsmittel können verschiedenartig ausgebildet sein. Gleiches gilt für die Regeleinrichtungen des ersten Befestigungsgurtes und des zweiten Befestigungsgurtes, die zur Längenänderung vorgesehen sind. Als Befestigungsgurte können solche zum Einsatz kommen, die ausreichende mechanische Eigenschaften aufweisen, um auch bei hohen Belastungen (z.B. bei Unfällen) den Kindersitz sicher halten und nicht reißen.

Darüber hinaus lassen sich durch die Befestigungseinrichtung die Längenanforderungen von unterschiedlich positionierten Ankerpunkten in verschiedenen Kraftfahrzeugen realisieren.

Die hierin beschriebene Befestigungseinrichtung dient in erster Linie zur Befestigung von Fahrzeugkindersitzen, die über eine Basis drehbar gelagert sind und über die Basis auf der Sitzfläche eines Fahrzeugsitzes angeordnet werden.

Der gemeinsame Befestigungsabschnitt und/oder die Befestigungsmittel können einen Haken oder eine Öse aufweisen. Die korrespondierenden Befestigungselemente am Fahrzeug oder am Fahrzeugkindersitz können dann entsprechend Ösen oder Haken sein.

Der erste Befestigungsgurt und/oder der zweite Befestigungsgurt können aus mindestens zwei Gurtteilen bestehen, wobei die mindestens zwei Gurtteile über die Regeleinrichtung miteinander verbunden sind.

Das erste Befestigungsmittel und/oder das zweite Befestigungsmittel können Vorrichtungen aufweisen, die dazu ausgebildet sind, die Länge der Befestigungsgurte oder der Gurtteile zwischen dem gemeinsamen Befestigungsabschnitt und den Befestigungsmitteln zu verändern. Die Vorrichtungen können insbesondere auch bei einem Befestigungsgut mit zwei Gurteilen vorgesehen sein und die entsprechenden Gurtteile zwischen den Regeleinrichtungen und entweder den Befestigungsmitteln oder dem gemeinsamen Befestigungsabschnitt in ihrer Länge verändern. Dabei können vorzugsweise die Vorrichtungen durch die Regeleinrichtungen gebildet sein. Die Regeleinrichtungen können insbesondere zwei Verbindungsabschnitte mit jeweils einem Gurtteil aufweisen. Eine Verlagerung der Regeleinrichtung in eine Richtung bewirkt dann ein Kürzen eines Gutteilabschnitts und ein entsprechendes Verlängern des anderen Gurtteilabschnitts oder zumindest das Verlängern eines Gurtteilabschnitts, um die Gesamtlänge des entsprechenden Befestigungsgurtes zu verändern, wodurch der Kindersitz rotiert werden kann.

Die erste Regeleinrichtung des ersten Befestigungsgurtes kann im Bereich des ersten Befestigungsmittels und die zweite Regeleinrichtung des zweiten Befestigungsgurtes kann im Bereich des gemeinsamen Befestigungsabschnitts angeordnet sein. Die erste Regeleinrichtung dient zur Veränderung der Länge des ersten Befestigungsgurtes, damit der Kindersitz rotiert werden kann. Daher ist es hilfreich, wenn die erste Regeleinrichtung im Bereich des Kindersitzes für einen Benutzer leicht zugänglich ist. Die zweite Regeleinrichtung dient zum Spannen des Kindersitzes über die Basis. Die Länge des zweiten Befestigungsgurtes wird in der Regel einmal eingestellt und danach kaum verändert. Höchstens ein Nachstellen zum Spannen des zweiten Befestigungsgurtes ist erforderlich, wobei die zweite Regeleinrichtung nicht häufig bedient werden muss und daher im Bereich des Befestigungs- bzw. Ankerpunktes angeordnet sein kann. Darüber hinaus wird durch die Anordnung der zweiten Regeleinrichtung hinter einem Fahrzeugsitz verhindert, dass unbeabsichtigt die zweite Regeleinrichtung betätigt werden kann und leicht zugänglich ist.

Die vorstehend genannte Aufgabe wird auch durch eine Anordnung gelöst, aufweisend eine Befestigungseinrichtung gemäß einer der vorstehend beschriebenen Ausführungen und einen Fahrzeugkindersitz, der auf einem Fahrzeugsitz eines Kraftfahrzeugs anordenbar ist, wobei der erste Befestigungsgurt über das erste Befestigungsmittel an einem oberen Abschnitt der Rückenlehne des Fahrzeugkindersitzes angeordnet ist, und wobei der zweite Befestigungsgurt über das zweite Befestigungsmittel an einem unteren Basisteil des Fahrzeugkindersitzes angeordnet ist.

Unter der hier beschriebenen Anordnung kann ein Fahrzeugkindersitz verstanden werden, der eine Befestigungseinrichtung mit einem ersten Befestigungsgurt und einem zweiten Befestigungsgurt aufweist.

Die Befestigungseinrichtung kann über das erste Befestigungsmittel und das zweite Befestigungsmittel lösbar oder dauerhaft mit dem Fahrzeugkindersitz verbunden sein. Ein Kindersitz kann beispielsweise eine Befestigungseinrichtung aufweisen, die fester Bestandteil des Kindersitzes ist. In weiteren Ausführungsformen kann die Befestigungseinrichtung über die ersten und zweiten Befestigungsmittel sowie korrespondierende Befestigungsstellen an der Basis und dem Sitzteil mit der Rückenlehne des Kindersitzes mit diesem verbunden werden.

Der Fahrzeugkindersitz kann eine Basis, über welche der Fahrzeugkindersitz auf einer Sitzfläche eines Fahrzeugsitzes angeordnet werden kann, und einen Sitzteil mit Rückenlehne aufweisen, der relativ zur Basis um seine Hochachse verdrehbar ist. Die hierin beschriebene Anordnung kann insbesondere auch ein drehbarer Kindersitz mit einer Basis sein, wobei die Basis fest mit einem Fahrzeugsitz verbindbar und das Sitzteil um die Basis verdrehbar ist.

Die vorstehend genannte Aufgabe wird auch durch ein Kraftfahrzeug mit mindestens einer Anordnung gemäß einer der vorstehend beschriebenen Ausführungen gelöst, wobei der gemeinsame Befestigungsabschnitt der Befestigungseinrichtung mit einer korrespondierenden Befestigungsvorrichtung des Kraftfahrzeugs in Fahrtrichtung hinter einem Fahrzeugsitz lösbar befestigt ist, wobei der erste Befestigungsgurt und der zweite Befestigungsgurt über einen oberen Abschnitt der Rückenlehne des Fahrzeugsitzes des Kraftfahrzeugs geführt sind, wobei der erste Befestigungsgurt über das erste Befestigungsmittel an dem oberen Abschnitt der Rückenlehne des Fahrzeugkindersitzes angeordnet ist, der auf dem Fahrzeugsitz angeordnet ist, und wobei der zweite Befestigungsgurt über das zweite Befestigungsmittel an einem unteren Basisteil des Fahrzeugkindersitzes angeordnet ist.

Die vorstehend genannte Aufgabe wird auch durch die Verwendung einer Befestigungseinrichtung nach einer der vorstehend beschriebenen Ausführungen zur Befestigung eines Fahrzeugkindersitzes an einem Fahrzeugsitz eines Kraftfahrzeugs gelöst.

Die Befestigungseinrichtung eignet sich insbesondere zur Verwendung um Kindersitze, die drehbar auf einer Basis angeordnet sind, an einem Fahrzeugsitz zu befestigen, wobei das Lösen eines ersten Befestigungsgurtes einfach erfolgen kann, ohne die sichere Lagerung des Kindersitzes bei der Längenänderung und dem Verdrehen des Sitzteils zu gefährden.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: eine schematische Darstellung einer Befestigungseinrichtung mit einem ersten Befestigungsgurt und einem zweiten Befestigungsgurt sowie einem gemeinsamen Befestigungsabschnitt;
- Fig. 2: eine schematische Darstellung eines Fahrzeugkindersitzes, der über eine Befestigungseinrichtung auf einem Fahrzeugsitz eines Kraftfahrzeugs in einer ersten Position angeordnet ist; und
- Fig. 3: eine schematische Darstellung des Fahrzeugkindersitzes, der über eine Befestigungseinrichtung auf einem Fahrzeugsitz eines Kraftfahrzeugs in einer zweiten Position angeordnet ist.

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

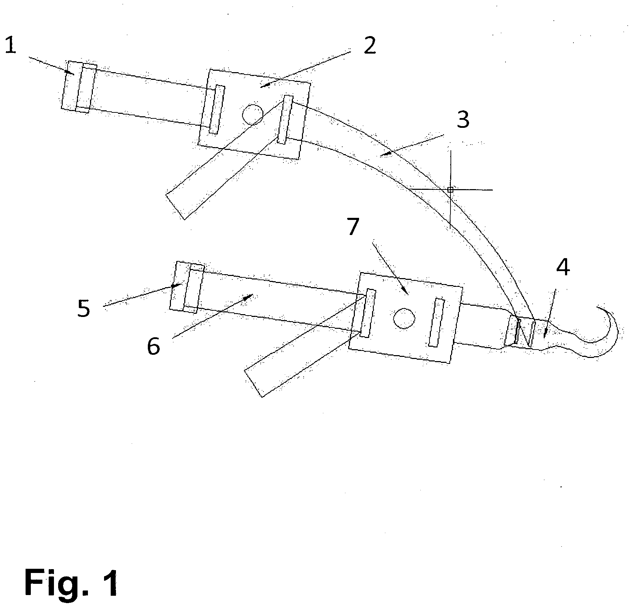

Fig. 1 zeigt eine schematische Darstellung einer Befestigungseinrichtung mit einem ersten Befestigungsgurt 3 und einem zweiten Befestigungsgurt 6 sowie einem gemeinsamen Befestigungsabschnitt.

Sowohl der erste Befestigungsgurt 3 als auch der zweite Befestigungsgurt 6 bestehen aus zwei Gurtteilen, die über eine erste Regeleinrichtung 2 bzw. eine zweite Regeleinrichtung 7 miteinander verbunden sind. Ein Abschnitt von ersten Gurtteilen der Befestigungsgurte 3 und 6 weist ein erstes Befestigungsmittel 1 bzw. ein zweites Befestigungsmittel 5 auf. Über die Befestigungsmittel 1 und 5 sind die entsprechenden Abschnitte der Befestigungsgurte 3 und 6 mit einem Fahrzeugkindersitz 20 verbindbar.

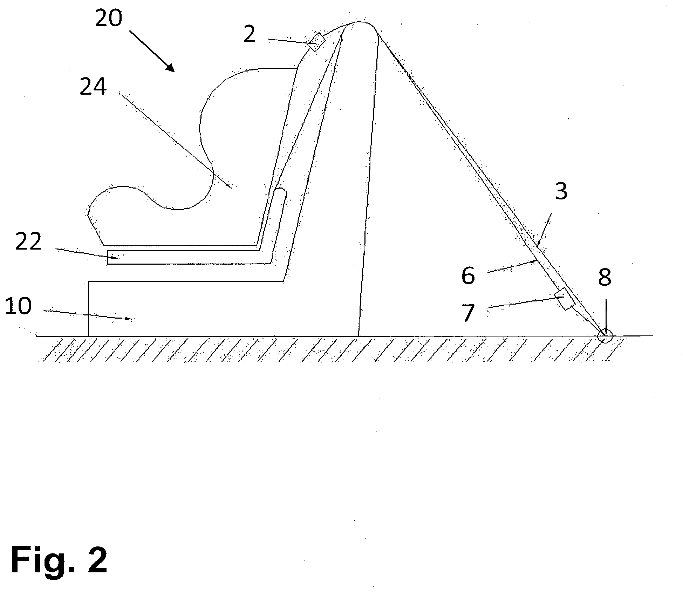

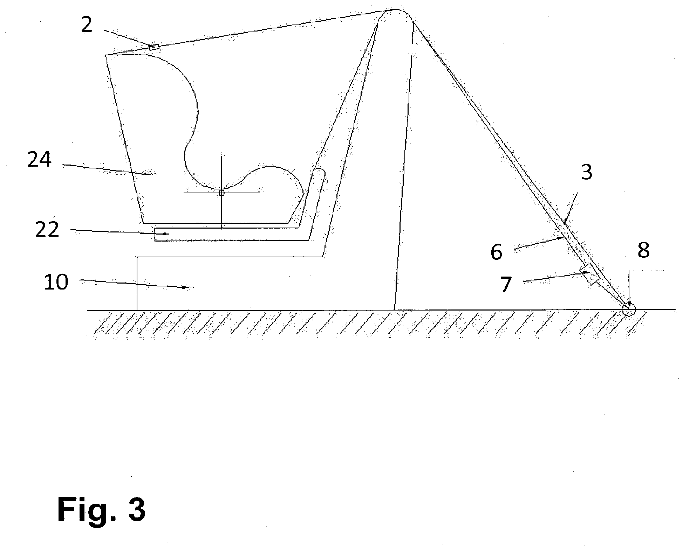

Wie insbesondere aus den Fig. 2 und 3 ersichtlich, wird der erste Befestigungsgurt über das erste Befestigungsmittel 1 an einem oberen Abschnitt der Rückenlehne eines Sitzteils 24 mit Lehne des Fahrzeugkindersitzes 20 verbunden. Der zweite Befestigungsgurt 6 wird über das zweite Befestigungsmittel 5 an einer Basis 22 des Kindersitzes 20 befestigt.

Ein Abschnitt von zweiten Gurtteilen der Befestigungsgurte 3 und 6 ist mit einem Haken 4 verbunden. Der Haken 4 befindet sich im gemeinsamen Befestigungsabschnitt für die beiden Befestigungsgurte 3 und 6. Der Haken 4 dient zur Befestigung der Befestigungseinrichtung mit den beiden Befestigungsgurten 3 und 6 an einem Ankerpunkt 8 in einem Fahrzeug.

In dem in den Fig. 2 und 3 gezeigten Ausführungsbeispiel befindet sich der Ankerpunkt 8 im Fahrzeug in Fahrtrichtung hinter dem Fahrzeugsitz 10.

Die Befestigungsmittel 1 und 5 können verschiedenartig ausgebildet sein. So können die Befestigungsmittel 1 und 5 wie in Fig. 1 schematisch gezeigt als Ösen in Form eines Rechtecks mit einer waagerechten Querstrebe im Wesentlichen in der Mitte ausgebildet sein. Die Ösen können über weitere Gurte oder Haken am Fahrzeugkindersitz 20 mit dem Fahrzeugkindersitz 20 lösbar oder fest verbunden sein. Über die Befestigungsmittel 1 und 5, vor allem in der gezeigten Ausführungsform, kann auch eine Längenänderung der ersten Abschnitte von Gurtteilen zwischen den Befestigungsmitteln 1 und 5 und den Regeleinrichtungen 2 und 7 erfolgen.

Die Längenänderung der Befestigungsgurte 3 und 6 erfolgt jedoch überwiegend über die erste Regeleinrichtung 2 und die zweite Regeleinrichtung 7, welche die beiden Gurtteile der Befestigungsgurte 3 und 6 miteinander verbinden. Wie in Fig. 1 schematisch gezeigt, ist einer der Gurtteile der jeweiligen Befestigungsgurte 3 und 6 über die Regeleinrichtungen 2, 7 nicht in seiner Länge veränderbar. Der jeweils andere Gurtteil ragt teilweise aus einer entsprechenden Öffnung in den Regeleinrichtungen 2 und 7 hervor. Dieser Gurtabschnitt ist in seiner Länge derart veränderbar, dass die Länge zwischen dem zweiten Befestigungsmittel 5 und der zweiten Regeleinrichtung 7 bzw. zwischen der ersten Regeleinrichtung 2 und dem Haken 4 verändert werden kann.

Die Längenänderung kann über die Regeleinrichtungen 2 und 7 mit einer Hand erfolgen. Es kann beispielsweise ein Ziehen der freien Enden der Gurtteile der Befestigungsgurte 3 und 6 erfolgen, um die Länge der Befestigungsgurte 3 und 6 zu verändern bzw. die Gesamtlänge der Befestigungsgurte 3 und 6 zu verkürzen. Eine Verlägerung der Regeleinrichtungen 2 und 7 kann hingegen eine Verlängerung der Gesamtlänge der Befestigungsgurte 3 und 6 hervorrufen. Die erste Regeleinrichtung 2 und die zweite Regeleinrichtung 7 können hierzu Rastmittel aufweisen. Erst nach dem Lösen der Rastmittel kann eine Verlagerung der Gurtteile der Befestigungsgurte 3 und 6 bewirkt werden. Eine Vergrößerung der Länge kann über die andere Hand eines Benutzers erfolgen, der an dem entsprechenden Gurtteil zieht.

Der Haken 4 befindet sich im gemeinsamen Befestigungsabschnitt für das Fahrzeug. Der Haken wird über eine entsprechende Öse im Ankerpunkt 8 mit dem Fahrzeug verbunden. Über die zweite Regeleinrichtung 7 kann die Spannung des zweiten Befestigungsgurtes 6 verändert werden. Ein Spannen des zweiten Befestigungsgurtes 6 erhöht die gesamte Stabilität des Fahrzeugkindersitzes 20 und steigert auch dessen Stoßfestigkeit.

Die Gurtteile der Befestigungsgurte 3 und 6 bestehen aus einem Textil, das im Hinblick auf die auftretenden Belastungen ausreichende mechanische Eigenschaften aufweist. Es sind hierfür gewirkte Gurte mit hohen Zugfestigkeitswerten bekannt, die sich für den Einsatz bei Kindersitzen eignen.

Fig. 2 zeigt eine schematische Darstellung eines Fahrzeugkindersitzes 20, der über eine Befestigungseinrichtung gemäß Fig. 1 auf einem Fahrzeugsitz 10 eines Kraftfahrzeugs in einer ersten Position angeordnet ist, wobei die Blickrichtung eines Kindes in Fahrtrichtung nach vorne gerichtet ist.

Bei dem Fahrzeugkindersitz 20 handelt es sich um einen Kindersitz, der eine Basis 22 und ein Sitzteil 24 mit einer Lehne aufweist, wobei die Basis 22 beispielsweise über ISOFIX-Konnektoren fest mit dem Fahrzeugsitz 10 verbunden werden kann. Der Fahrzeugkindersitz 20 ist drehbar ausgebildet, sodass das Sitzteil 24 um seine Hochachse verdreht werden kann, wodurch sowohl Babys und als auch Kleinkinder sicher über den Fahrzeugkindersitz 20 transportiert werden können. In der in Fig. 1 gezeigten Darstellung können Kleinkinder mit Blickrichtung in Fahrtrichtung sicher transportiert werden. Fig. 3 zeigt den Zustand des Fahrzeugkindersitzes 20, wobei Babys mit Blickrichtung entgegen der Fahrtrichtung sicher transportiert werden können. Es kann zusätzlich ein Kippen des Sitzteils 24 möglich sein, wobei der Sitzteil um eine Querachse verschwenkbar ist, so dass vor allem in der in Fig. 3 gezeigte Stellung Babys eine Liegestellung einnehmen. Dazu muss das Sitzteil 24 über eine weitere Arretierungseinrichtung entriegelt werden.

Der Fahrzeugkindersitz 20 weist eine Befestigungseinrichtung aus Fig. 1 auf. Die Befestigungsgurte 3 und 6 sind über den gemeinsamen Befestigungsabschnitt im Ankerpunkt 8 und den Haken 4 mit dem Fahrzeug verbunden. Die Befestigungsgurte 3 und 6 sind über die Rückenlehne des Fahrzeugs 10 geführt und mit dem Fahrzeugkindersitz 20 verbunden.

Der obere erste Befestigungsgurt 3 ist über das erste Befestigungsmittel 1 fest oder lösbar mit einem oberen Abschnitt der Rückenlehne des Kindersitzes 20 verbunden. Der untere zweite Befestigungsgurt 6 ist mit der Basis 22 fest verbunden. Um die Befestigungsgurte 3 und 6 zu spannen, werden die Regeleinrichtungen 2 und 7 entsprechend verlagert oder die freien Enden der Gurtteile angezogen. Dies kann über eine Hand erfolgen. Die Einstellung der Spannung für den zweiten Befestigungsgurt 6 erfolgt in der Regel direkt nach dem Anordnen der Basis 22 auf dem Fahrzeugsitz 10, sodass sich die zweite Regeleinrichtung 7 im Bereich des Ankerpunktes 8 befinden kann und nicht permanent zugänglich sein muss.

Die erste Regeleinrichtung 2 befindet sich im Bereich der Anbindungsstelle an die Rückenlehne des Fahrzeugkindersitzes 20 und ist daher stets leicht zugänglich. Gegenüber bekannten Ausführungen, wobei ein oberer Gurt an der Rückseite des Fahrzeugsitzes oder an einem Ankerpunkt am Boden des Fahrzeugs angeordnet ist und die Verstellung im Wesentlichen im Bereich des Ankerpunktes erfolgen muss, bietet die hier vorgeschlagene Lösung den Vorteil, dass zum Verbringen des Sitzteils 24 nach einer optionalen Entriegelung einer Rastvorrichtung zwischen dem Sitzteil 24 und der Basis 22 die Länge des Befestigungsgurts 3 schnell und einfach verändert werden kann.

Die Basis 22 kann neben der Anordnung, die auf der Sitzfläche des Fahrzeugsitzes 10 aufliegt, noch einen Abschnitt aufweisen, der sich gegen die Rückenlehne des Fahrzeugsitzes 10 abstützt (in den Figuren nicht gezeigt), so dass kein Verkippen/Verschwenken der Basis 22 und des Fahrzeugkindersitzes 20 auftreten können. Im Zusammenspiel mit dem zweiten Befestigungsgurt 6 wird die Position der Basis 22 und damit des gesamten Fahrzeugkindersitzes 20 stets aufrechterhalten, auch dann wenn der erste Befestigungsgurt 3 gelockert und das Sitzteil 24 verdreht werden. Bekannte Ausführungen derartiger Kindersitze aus dem Stand der Technik konnten während der Verstellung von Sitzteilen eine Verlagerung der Basis eben nicht sicherstellen, weil nur ein Gurt vorhanden ist, der während des Verstellens des Sitzteils gelockert werden muss, wodurch keine zusätzliche Spannung durch den Gurt auf die Basis vorherrscht. Die Basis wird dann bei den bekannten Ausführungen bspw. nur über ISOFIX-Konnektoren gehalten und kann verkippen.

Fig. 3 zeigt eine schematische Darstellung des Fahrzeugkindersitzes 20, der über die Befestigungseinrichtung gemäß Fig. 1 auf dem Fahrzeugsitz 10 des Kraftfahrzeugs aus Fig. 2 in einer zweiten Position angeordnet ist.

In Fig. 3 ist das Sitzteil 24 um die Hochachse verdreht worden. Hierzu muss die Gesamtlänge des zweiten Befestigungsgurtes 6 nicht verändert werden. Lediglich die Gesamtlänge des ersten Befestigungsgurtes 3 ist verändert worden, wobei hierzu die erste Regeleinrichtung 2 über eine Hand eines Benutzers betätigt und der Befestigungsgurt 3 beispielsweise über die andere Hand des Benutzers gelockert wurde.

Wie im Ausführungsbeispiel gezeigt, ist die Veränderung des ersten Befestigungsgurtes 3 einfach möglich. Die korrespondierende erste Regeleinrichtung 2 befindet sich in unmittelbarer Nähe der Rückenlehne des Fahrzeugkindersitzes 20 und ist somit leicht zugänglich. Über den zweiten Befestigungsgurt 6 wird die gesamte Stabilität des Fahrzeugkindersitzes 20 auch während des Verdrehens des Sitzteils 24 aufrechterhalten.

Obwohl die Erfindung im Detail durch die vorteilhaften Ausführungsbeispiele näher illustriert und beschrieben wurde, so ist die Erfindung nicht durch die offenbarten Beispiele eingeschränkt. Andere Variationen können vom Fachmann hieraus abgeleitet werden, ohne den Schutzumfang der Erfindung zu verlassen.

### Bezugszeichenliste

- 1: erstes Befestigungsmittel
- 2: erste Regeleinrichtung
- 3: erster Befestigungsgurt
- 4: Haken
- 5: zweites Befestigungsmittel
- 6: zweiter Befestigungsgurt
- 7: zweite Regeleinrichtung
- 8: Ankerpunkt
- 10: Fahrzeugsitz
- 20: Fahrzeugkindersitz
- 22: Basis
- 24: Sitzteil mit Lehne

## Patentansprüche

1. Befestigungseinrichtung für Fahrzeugkindersitze (20) in Kraftfahrzeugen, mindestens aufweisend einen ersten Befestigungsgurt (3) und einen zweiten Befestigungsgurt (6), **dadurch gekennzeichnet, dass** der erste Befestigungsgurt (3) und der zweite Befestigungsgurt (6) einen gemeinsamen Befestigungsabschnitt aufweisen, der dazu ausgebildet ist, mit einer korrespondierenden Befestigungsvorrichtung eines Kraftfahrzeugs in Fahrtrichtung hinter einem Fahrzeugsitz (10) befestigt zu werden, wobei der erste Befestigungsgurt (3) und der zweite Befestigungsgurt (6) dazu ausgebildet sind, über einen oberen Abschnitt der Rückenlehne des Fahrzeugsitzes (10) des Kraftfahrzeugs geführt zu werden, wobei der erste Befestigungsgurt (3) über ein erstes Befestigungsmittel (1) an einem oberen Abschnitt der Rückenlehne eines Fahrzeugkindersitzes (20) befestigbar ist, der auf dem Fahrzeugsitz (10) angeordnet ist, und wobei der zweite Befestigungsgurt (6) über ein zweites Befestigungsmittel (5) an einem unteren Basisteil des Fahrzeugkindersitzes (20) befestigbar ist, und wobei der erste Befestigungsgurt (3) und der zweite Befestigungsgurt (6) jeweils Regeleinrichtungen (2, 7) aufweisen, mittels welchen die Länge der Befestigungsgurte (3, 6) zwischen dem gemeinsamen Befestigungsabschnitt und den Befestigungsmitteln (1, 5) veränderbar ist.

2. Befestigungseinrichtung nach Anspruch 1, wobei der gemeinsame Befestigungsabschnitt und/oder die Befestigungsmittel (1, 5) einen Haken (4) oder eine Öse aufweisen.

3. Befestigungseinrichtung nach Anspruch 1 oder 2, wobei der erste Befestigungsgurt (3) und/oder der zweite Befestigungsgurt (6) aus mindestens zwei Gurtteilen bestehen, wobei die mindestens zwei Gurtteile über die Regeleinrichtung (2; 7) miteinander verbunden sind.

4. Befestigungseinrichtung nach einem der Ansprüche 1 bis 3,
wobei das erste Befestigungsmittel (1) und/oder das zweite Befestigungsmittel (5) Vorrichtungen aufweisen, die dazu ausgebildet sind, die Länge der Befestigungsgurte (3, 6) oder der Gurtteile zwischen dem gemeinsamen Befestigungsabschnitt und den Befestigungsmitteln (1, 5) zu verändern.

5. Befestigungseinrichtung nach einem der Ansprüche 1 bis 4,
wobei die erste Regeleinrichtung (2) des ersten Befestigungsgurtes (3) im Bereich des ersten Befestigungsmittels (1) und die zweite Regeleinrichtung (7) des zweiten Befestigungsgurtes (6) im Bereich des gemeinsamen Befestigungsabschnitts angeordnet sind.

6. Anordnung, aufweisend eine Befestigungseinrichtung nach einem der Ansprüche 1 bis 5 und einen Fahrzeugkindersitz (20), der auf einem Fahrzeugsitz (10) eines Kraftfahrzeugs anordenbar ist, wobei der erste Befestigungsgurt (3) über das erste Befestigungsmittel (1) an einem oberen Abschnitt der Rückenlehne des Fahrzeugkindersitzes (20) angeordnet ist, und wobei der zweite Befestigungsgurt (6) über das zweite Befestigungsmittel (5) an einem unteren Basisteil des Fahrzeugkindersitzes (20) angeordnet ist.

7. Anordnung nach Anspruch 6, wobei die Befestigungseinrichtung über das erste Befestigungsmittel (1) und das zweite Befestigungsmittel (5) lösbar oder dauerhaft mit dem Fahrzeugkindersitz (20) verbunden ist.

8. Anordnung nach einem Anspruch 6 oder 7, wobei der Fahrzeugkindersitz (20) eine Basis (22), über welche der Fahrzeugkindersitz (20) auf einer Sitzfläche eines Fahrzeugsitzes (10) angeordnet werden kann, und einen Sitzteil (24) mit Rückenlehne aufweist, der relativ zur Basis (22) um seine Hochachse verdrehbar ist.

9. Kraftfahrzeug mit mindestens einer Anordnung nach einem der Ansprüche 6 bis 8, wobei der gemeinsame Befestigungsabschnitt der Befestigungseinrichtung mit einer korrespondierenden Befestigungsvorrichtung des Kraftfahrzeugs in Fahrtrichtung hinter einem Fahrzeugsitz (10) lösbar befestigt ist, wobei der erste Befestigungsgurt (3) und der zweite Befestigungsgurt (6) über einen oberen Abschnitt der Rückenlehne des Fahrzeugsitzes (10) des Kraftfahrzeugs geführt sind, wobei der erste Befestigungsgurt (3) über das erste Befestigungsmittel (1) an dem oberen Abschnitt der Rückenlehne des Fahrzeugkindersitzes (20) angeordnet ist, der auf dem Fahrzeugsitz (10) angeordnet ist, und wobei der zweite Befestigungsgurt (6) über das zweite Befestigungsmittel (5) an einem unteren Basisteil des Fahrzeugkindersitzes (20) angeordnet ist.

10. Verwendung einer Befestigungseinrichtung nach einem der Ansprüche 1 bis 5 zur Befestigung eines Fahrzeugkindersitzes (20) an einem Fahrzeugsitz (10) eines Kraftfahrzeugs.

## Claims

1. Fastening device for vehicle child seats (20) in motor vehicles, at least comprising a first fastening belt (3) and a second fastening belt (6), **characterized in that** the first fastening belt (3) and the second fastening belt (6) have a common fastening section which is designed to be fastened to a corresponding fastening device of a motor vehicle behind a vehicle seat (10) in the direction of travel, wherein the first fastening belt (3) and the second fastening belt (6) are designed to be guided over an upper section of the backrest of the vehicle seat (10) of the motor vehicle, wherein the first fastening belt (3) is attachable via a first fastening means (1) to an upper section of the backrest of a vehicle child seat (20) which is arranged on the vehicle seat (10), and wherein the second fastening belt (6) is attachable via a second fastening means (5) to a lower base part of the vehicle child seat (20), and wherein the first fastening belt (3) and the second fastening belt (6) each comprise control devices (2, 7) by means of which the length of the fastening belts (3, 6) between the common fastening section and the fastening means (1, 5) is variable.

2. Fastening device according to claim 1, wherein the common fastening section and/or the fastening means (1, 5) comprise a hook (4) or an eye.

3. Fastening device according to claim 1 or 2, wherein the first fastening belt (3) and/or the second fastening belt (6) consist of at least two belt parts, wherein the at least two belt parts are connected to each other via the control device (2; 7).

4. Fastening device according one of the claims 1 to 3,
wherein the first fastening means (1) and/or the second fastening means (5) comprise devices which are designed to vary the length of the fastening belts (3, 6) or belt parts between the common fastening section and the fastening means (1, 5).

5. Fastening device according one of the claims 1 to 4,
wherein the first control device (2) of the first fastening belt (3) is arranged in the region of the first fastening means (1) and the second control device (7) of the second fastening belt (6) is arranged in the region of the common fastening section.

6. Arrangement, comprising a fastening device according to one of the claims 1 to 5 and a vehicle child seat (20) which can be arranged on a vehicle seat (10) of a motor vehicle, wherein the first fastening belt (3) is arranged via the first fastening means (1) on an upper section of the backrest of the vehicle child seat (20), and wherein the second fastening belt (6) is arranged via the second fastening means (5) on a lower base part of the vehicle child seat (20).

7. Arrangement according to claim 6, wherein the fastening device is detachably or permanently connected to the vehicle child seat (20) via the first fastening means (1) and the second fastening means (5).

8. Arrangement according to claim 6 or 7, wherein vehicle child seat (20) comprises a base (22) via which the vehicle child seat (20) can be arranged on a seating surface of a vehicle seat (10), and a seat part (24) with a backrest, which is rotatable relative to the base (22) about its vertical axis.

9. Motor vehicle with at least an arrangement according to one of the claims 6 to 8, wherein the common fastening section of the fastening device is detachably fastened to a corresponding fastening device of the motor vehicle behind a vehicle seat (10) in the direction of travel, wherein the first fastening belt (3) and the second fastening belt (6) are guided over an upper section of the backrest of the vehicle seat (10) of the motor vehicle, wherein the first fastening belt (3) is arranged via the first fastening means (1) on the upper section of the backrest of the vehicle child seat (20) which is arranged on the vehicle seat (10), and wherein the second fastening belt (6) is arranged via the second fastening means (5) on a lower base part of the vehicle child seat (20).

10. Use of a fastening device according to one of the claims 1 to 5 for fastening a vehicle child seat (20) to a vehicle seat (10) of a motor vehicle.

## Revendications

1. Équipement de fixation pour des sièges pour enfant de véhicule (20) dans des véhicules automobiles, présentant au moins une première ceinture de fixation (3) et une seconde ceinture de fixation (6), **caractérisé en ce que** la première ceinture de fixation (3) et la seconde ceinture de fixation (6) présentent une section de fixation commune qui est conçue pour être fixée derrière un siège de véhicule (10) à un dispositif de fixation correspondant d'un véhicule automobile dans le sens de la marche, dans lequel la première ceinture de fixation (3) et la seconde ceinture de fixation (6) sont conçues pour être guidées par-dessus une section supérieure du dossier du siège de véhicule (10) du véhicule automobile, dans lequel la première ceinture de fixation (3) peut être fixée via un premier moyen de fixation (1) contre une section supérieure du dossier d'un siège pour enfant de véhicule (20) qui est agencé sur le siège de véhicule (10), et dans lequel la seconde ceinture de fixation (6) peut être fixée via un second moyen de fixation (5) contre une embase inférieure du siège pour enfant de véhicule (20), et dans lequel la première ceinture de fixation (3) et la seconde ceinture de fixation (6) présentent respectivement des équipements de réglage (2, 7) au moyen desquels la longueur des ceintures de fixation (3, 6) peut être modifiée entre la section de fixation commune et les moyens de fixation (1, 5).

2. Équipement de fixation selon la revendication 1, dans lequel la section de fixation commune et/ou les moyens de fixation (1, 5) présentent un crochet (4) ou une boucle.

3. Équipement de fixation selon la revendication 1 ou 2, dans lequel la première ceinture de fixation (3) et/ou la seconde ceinture de fixation (6) sont constituées d'au moins deux parties de ceinture, dans lequel les au moins deux parties de ceinture sont reliées ensemble via l'équipement de réglage (2, 7).

4. Équipement de fixation selon l'une des revendications 1 à 3, dans lequel le premier moyen de fixation (1) et/ou le second moyen de fixation (5) présentent des dispositifs qui sont conçus pour modifier la longueur des ceintures de fixation (3, 6) ou des parties de ceinture entre la section de fixation commune et les moyens de fixation (1, 5).

5. Équipement de fixation selon l'une des revendications 1 à 4, dans lequel le premier équipement de réglage (2) de la première ceinture de fixation (3) est agencé dans la zone du premier moyen de fixation (1) et le second équipement de réglage (7) de la seconde ceinture de fixation (6) est agencé dans la zone de la section de fixation commune.

6. Agencement présentant une équipement de fixation selon l'une des revendications 1 à 5 et un siège pour enfant de véhicule (20) qui peut être agencé sur un siège de véhicule (10) d'un véhicule automobile, dans lequel la première ceinture de fixation (3) est agencée via le premier moyen de fixation (1) contre une section supérieure du dossier du siège pour enfant de véhicule (20), et dans lequel la seconde ceinture de fixation (6) est agencée via le second moyen de fixation (5) contre une embase inférieure du siège pour enfant de véhicule (20).

7. Agencement selon la revendications 6, dans lequel l'équipement de fixation est relié au siège pour enfant de véhicule (20) de façon amovible ou permanente via le premier moyen de fixation (1) et le second moyen de fixation (5).

8. Agencement selon une revendication 6 ou 7, dans lequel le siège pour enfant de véhicule (20) présente une base (22) par-dessus laquelle le siège pour enfant de véhicule (20) peut être agencé sur une surface d'assise d'un siège de véhicule (10), et une partie de siège (24) avec dossier qui peut être pivotée autour de son axe vertical par rapport à la base (22).

9. Véhicule automobile avec au moins un agencement selon l'une des revendications 6 à 8, dans lequel la section de fixation commune de l'équipement de fixation est fixée de façon amovible derrière un siège de véhicule (10) à un dispositif de fixation correspondant du véhicule automobile dans le sens de la marche, dans lequel la première ceinture de fixation (3) et la seconde ceinture de fixation (6) sont guidées par-dessus une section supérieure du dossier du siège de véhicule (10) du véhicule automobile, dans lequel la première ceinture de fixation (3) est agencée via le premier moyen de fixation (1) contre la section supérieure du dossier du siège pour enfant de véhicule (20) qui est agencé sur le siège de véhicule (10), et dans lequel la seconde ceinture de fixation (6) est agencée via le second moyen de fixation (5) contre une embase inférieure du siège pour enfant de véhicule (20).

10. Utilisation d'un équipement de fixation selon l'une des revendications 1 à 5 pour fixer un siège pour enfant de véhicule (20) contre un siège de véhicule (10) d'un véhicule automobile.
